# EUROPÄISCHE PATENTANMELDUNG

(11) **EP 1 667 307 A1**
(43) Veröffentlichungstag der Anmeldung: **07.06.2006**
(21) Anmeldenummer: 05026394.6
(22) Anmeldetag: 02.12.2005
(51) Int. Cl.: H02J 7/00, H01M 10/50

(54) **Vorrichtung zum Schutz gegen überhöhte Betriebstemperaturen von Mobiltelefonen**

(30) Priorität: 03.12.2004 DE 102004058435
(71) Anmelder: Häusermann Deutschland GmbH, 60323 Frankfurt (DE)
(72) Erfinder: Liedtke, Dr., Rainer K., 82031 Grünwald (DE)
(74) Vertreter: TBK-Patent

(57) **Zusammenfassung**

Vorrichtungen zum Schutz gegen überhöhte Betriebstemperatur von Mobiltelefonen, dadurch gekennzeichnet, dass der Temperaturstatus der Batterien im Betrieb über eine spezifische Vorrichtung permanent und direkt kontrolliert wird, wobei diese als ein Mehrkomponentensystem aus einem als Controller dienenden Microprozessor und einem direkt an oder in der Nähe der Batterie befindlichen Thermosensor zusammengesetzt ist, wobei der Microcontroller mit Aktuatoren oder dem Display des Mobiltelefones so verbunden ist, dass bei bei einer vorgegebenen Temperaturgrenze für den Nutzer über diese sensorisch erkennbare Warnsignale oder Warninformationen ausgelöst werden, wobei bei einer bestimmten Temperatur zudem auch Aktuatoren mit einer Kuhlungsfunktion aktiviert werden können, und wobei bei einer weiteren Temperaturgrenze der Betrieb der Mobiltelefones insgesamt inaktiviert wird.

## Beschreibung

Die Erfindung betrifft Vorrichtungen zum Schutz gegen überhitzte Betriebstemperatur von Mobiltelefonen, insbesondere um den körperlichen Sicherheitsgrad der Nutzer zu verbessern.

Es ist bekannt ist, daß Mobiltelefone für die abrufbereite Speicherung ihrer elektrischen Energie Batterien oder Akkmulatoren benötigen und diese daher in Mobiltelefonen direkt implementiert sind. Ebenso bekannt ist, dass diese Batterien, um auch in den abmessungsmässig ständig kleiner werdenden Mobiltefonen zu passen ebenfalls immer kleiner dimensioniert werden. Um aber dennoch eine längere Gebrauchsdauer zu ermöglichen werden für diese höhere Energiedichten benötigt. Diese erhöhte Energiedichte bedingt jedoch in vielen Fällen die Gefahr von Überhitzungen der Batterien, wenn deren ausreichende Entlüftung nicht gewährleistet ist. Dieser Vorgang ist analog vergleichbar mit einer erhöhten Betriebstemperatur wie sie beispielsweise im Verbrennungsmotor eines überlasteten Automobiles auftreten kann, das nicht genügend gekühlt wird. So wurden bei Tests mit Mobiltelefonen schon das Auftreten von Batterie-Temperaturen bis zu 600°Celsius gemessen. Dieser Aspekt stellt aber für Nutzer von Mobiltelefonen ein erhebliches Sicherheitsrisiko dar, da überhitzte Mobiltelefone Feuer fangen oder sogar explodieren können. Durch Zwischenfälle bei denen Mobiltelefone sich überhitzten oder auch explodierten, kam es bereits mehrfach zu Verletzungen der Nutzer. Insbesondere kam es zu Verbrennungen am Körper mit medizinisch relevantem Ausmaß, aber auch zu Sachschäden.

Infolge dieser den Mobiltelefonen seitens ihrer Energieversorgung permanent innewohnenden Gefahr für den Nutzer sind daher solche Schutzmaßnahmen erforderlich, die eine Gefahr von Batterieüberhitzung rechtzeitig erkennen und abwehren lassen und hierüber deren mögliche Gefährdungen eindämmen oder gänzlich ausschließen. Die derzeit eingesetzten Mobiltelefone verfügen nicht über geeignete derartige Warn- und Schutzvorrichtungen.

Der Erfindung liegt die Aufgabe zugrunde, den Schutz gegen überhitzte Betriebstemperatur von Mobiltelefonen zu verbessern.

Diese Aufgabe wird dadurch gelöst, dass der Temperaturstatus der Batterien im Betrieb über eine spezifische Vorrichtung permanent und direkt kontrolliert wird, wobei diese als ein Mehrkomponentensystem aus einem als Controller dienenden Microprozessor und einem direkt an oder in der Nähe der Batterie befindlichen Thermosensor zusammengesetzt ist, wobei der Microcontroller mit Aktuatoren oder dem Display des Mobiltelefones so verbunden ist, dass bei einer vorgegebenen Temperaturgrenze über diese für den Nutzer sensorisch erkennbare Warnsignale oder Warninformationen ausgelöst werden, wobei bei einer bestimmten Temperatur zudem auch Aktuatoren mit einer Kühlungsfunktion aktiviert werden können, und wobei bei einer weiteren Temperaturgrenze der Betrieb der Mobiltelefones insgesamt inaktiviert wird.

In einer weiteren Ausbildung der Erfindung sind, um den praktischen Einsatz zu verbessern die Warnsignale optisch, akustisch, mechanisch durch Vibration, chemisch oder in einer Kombination hieraus ausgestaltet.

In einer weiteren Ausbildung der Erfindung ist, um den praktischen Einsatz zu verbessern die Information über die aktuelle Temperatur der Batterie kontinuierlich auf dem Display des Mobiltelefones digital oder analog dargestellt, oder diese Information auf Abfrage durch den Nutzer über das Display darstellbar.

In einer weiteren Ausbildung der Erfindung erfolgt, um den praktischen Einsatz zu verbessern, eine Kontrolle der Betriebstemperatur der Batterie sowie der Aktuatoren über im Microprozessor vorgegebene Programme.

In einer weiteren Ausbildung der Erfindung ist, um den praktischen Einsatz zu verbessern, das gesamte Temperaturkontrollsystem als eine mechanisch separate Funktionseinheit mit der Batterie in Form einer Karte ausgestaltet, die reversibel in das Mobiltelefon eingesetzt werden kann.

In einer weiteren Ausbildung der Erfindung erfolgt, um den praktischen Einsatz zu verbessern, eine Kontrolle der Batterietemperatur über einen Sensor der deren Wärmeemission berührunsgslos über Infarot misst.

In einer weiteren Ausbildung der Erfindung erfolgt, um den praktischen Einsatz zu verbessern, über einen Sensor, der aus einer flexiblen, elektrisch leitenden Folie besteht und direkt auf die Oberfläche der Batterie aufgebracht ist.

In einer weiteren Ausbildung der Erfindung sind, um den praktischen Einsatz zu verbessern als weitere Schaltungselemente wahlweise sich unter thermischem Einfluss verformende mechanische Elemente, Thermolemente oder Thermistoren oder deren Kombinationen eingesetzt.

In einer weiteren Ausbildung der Erfindung wird, um den praktischen Einsatz zu verbessern die Batterie bei einer bestimmten Temperatur durch eine im Mobiltelefon installierte mechanische Vorrichtung ausgeworfen.

In einer weiteren Ausbildung der Erfindung ist, um den praktischen Einsatz zu verbessern, mit dem Temperaturkontrollsystem eine aktive Kühlvorrichtung gekoppelt, die bei einer bestimmten Temperaturgrenze aktiviert wird.

In einer weiteren Ausbildung der Erfindung sind, um den praktischen Einsatz auszuweiten, in das Temperaturkontrollsystem Eigenschaften zur Aufnahme, Speicherung, Verarbeitung und Weiterleitung von Daten integriert, wobei die Datenübertragung über elektrische Leitung, Funkwellen oder optische Wellen erfolgen kann.

In einer weiteren Ausbildung der Erfindung ist, um den praktischen Einsatz auszuweiten, die Anwendung des Temperaturkontrollsystems auch für solche mobilen batterie-elektrischen Geräte vorgesehen, deren Batterien in der Handhabung technisch vergleichbare Gefährdungspotenziale aufweisen wie sie bei Mobiltelefonen gegeben sind.

Die Vorteile der Erfindung bestehen darin, dass direkte thermische Kontrollvorrichtungen für Batterien von Mobiltelefonen als Schutzvorrichtungen derzeit noch nicht existieren. Vielmehr werden, infolge der bisher in diesem Zusammenhang aufgetretenen Unfälle, derzeit erst hierzu neue Sicherheitsstandards evaluiert.
Die direkten Vorteile der Erfindung ergeben sich dadurch, dass mit dieser für den Nutzer des Mobiltelefones eine permanente Überwachung und Kontrolle der Betriebstemperatur des Energiesystems ermöglicht wird. Damit können dieserseits unerwünschte Gefährdungen verringert werden.

Die Einrichtung einer Vorwarnung über eine direkte Kontrolle der Temperatur am Ort der temperaturerzeugenden Batterien selbst ist für eine frühzeitige Feststellung einer Fehlfunktion auch erforderlich, da die Aussenteile der Mobiltelefone noch deutlich kühler sind als die Temperatur der sich im Innenteil des Mobiltelefones befindlichen Batterie. Der Nutzer kann dies somit selbst sensorisch nicht wahrnehmen. Das Vorgehen ist daher in etwas vergleichbar mit der Kühlwasseranzeige eines Automobils, das eine geeignete Betriebstemperatur des Motors anzeigt. Diese Warninformation gibt dem Nutzer auch die Möglichkeit selbst eine frühzeitige Inaktivierung des Mobiltelefones oder auch eine Auswechselung der Batterie vorzunehmen und somit deren Beschädigung sowie anderen Schadwirkungen des Mobiltelefones vorzubeugen. Die vom Mikroprozessor durchgeführte automatische Inaktivierung des Mobiltelefones ist eine weitere Schutzmassnahme wenn sich das Gefährdungspotential weiter erhöht und die Vorwarnung vom Nutzer nicht festgestellt oder ignoriert werden sollte.
Das Kontrollsystem kann zudem bei allen Formen derzeitiger Batterietechnologien angewandt werden, die für einen mobilen Einsatz konzipiert sind, inbesondere auch für jene die über besonders hohe Kapazität verfügen, wie die derzeit in diesem Bereich führenden Lithium-Polymer Technologien. Ein weiterer technischer Vorteil ist, daß die Systeme mit üblichen Produktionsmitteln in größeren Mengen wirtschaftlich und reproduzierbar gefertigt werden können sowie, bis hin in Mikromaßstäbe, variable Dimensionierungen erlauben.

Ein technisches Beispiel der Erfindung, ohne es auf dieses Beispiel beschränken zu wollen, ist nachfolgend erläutert:

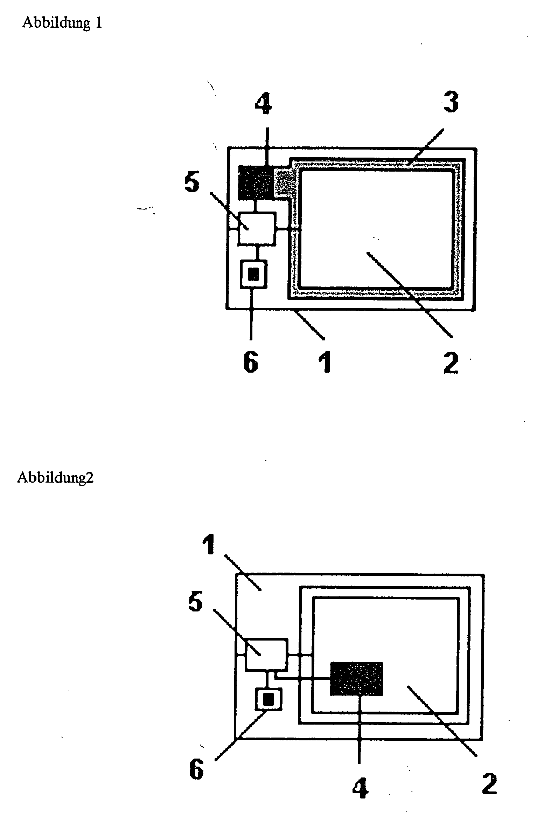

**Abbildung 1** ist in einer Sicht von oben eine schematische Darstellung für eine Ausgestaltung, ohne es auf diese eingrenzen zu wollen. Sie dient somit nur eine weiteren Verdeutlichung des Grundprinzips. In diesem Falle befindet sich die Batterie gemeinsam mit dem Kontrollsystem auf einer separaten Gehäuseplatine in Kartenform (1), wobei die Batterie (2) in einer mechanischen Aussparung liegt, die von einem luftgefüllten Spaltraum (3) umgeben ist. Über diesen die Batterie umgebenden Luftraum steht ein Infrarot-Thermosensor (4) mit der Batterie in berührungslosem Messkontakt. Der Thermosensor ist elektrisch mit dem Mikroprozessor (5) verbunden, der seinerseits in elektrischer Verbindung mit der Batterie (2) wie auch dem weiteren Betriebssystem des Mobiltelefons, beispielsweise dessen Display-Steuerung, steht. Desweiteren führen elektrische Leitungen des Microprozessors (5) zu einem Aktuator, in diesem Ausgestaltungsbeispiel, einer lichtemittierenden Diode (LED) (6). Diese gibt bei Erreichung eines im Microprozessor vorgegebenen Temperaturbereiches, durch zunehmende Blinkfrequenz eine optische Vorwarnung, was noch über ein durch das Kontrollsystem induziertes akustisches Signal oder auch eine Ansage wie auch eine Display-Anzeige ergänzt werden kann. Wenn ein weiterer kritischer Temperaturbereich überschritten ist geht die LED in eine Dauersignal über, wonach dann auch über den Mikroprozessor (5) die Stromversorgung zum Mobiltelefon unterbrochen wird, somit dessen Funktion insgesamt abgeschaltet wird.
**In Abbildung 2** ist schematisch das gleiche System dargestellt. Hierbei ist aber der Thermosensor (4) als eine elektrisch leitende, flexible Polymerfolie ausgestattet, die direkt auf die Oberfläche der Batterie (2) aufgebracht ist. Die Grundfunktionsweise unterscheidet sich hiermit gegenüber Abbildung 1 nur durch eine direkteren Temperaturmessung.

Zahlreiche weitere technische Ausgestaltungen z.B. solche mit Hilfe sich thermisch verformbarer mechanischer Schaltelemente, sind möglich. Beispielsweise kann auch statt einer separaten spezifischen LED-Anzeige der Microprozessor auch das Display des Mobiltelefones ansteuern und die Information nur über dieses ausgeben. In allen Fällen ist es das Ziel dem Nutzer eine Frühwarnung zum Betriebsstatus des Energiesystems zu geben, sowie, bei Überschreitung einer bestimmten Temperaturgrenze, eine Inaktivierung des Gesamtsystems herbeizuführen. Weitere Möglichkeiten, bestehen in der Aktivierung einer mit dem Mikroprozessor verbundenen aktiven Kühlvorrichtung, beispielsweise einem mikromechanischen Ventilationssystem.

Die Erfindung betrifft Vorrichtungen, mit denen Nutzern von Mobiltelefonen eine frühzeitige Warnung und Reaktion auf Fehlfunktionen der Betriebstemperatur durch Überhitzung ermöglicht wird. Hierüber lässt sich der Gefahr gesundheitlicher Schäden oder Sachschäden durch Überhitzung der Batterien von Mobiltelefonen vorbeugen.

## Patentansprüche

1. Vorrichtungen zum Schutz gegen überhitzte Betriebstemperatur von Mobiltelefonen, **dadurch gekennzeichnet, dass** der Temperaturstatus der Batterien im Betrieb über eine spezifische Vorrichtung permanent und direkt kontrolliert wird, wobei diese als ein Mehrkomponentensystem aus einem als Controller dienenden Microprozessor und einem direkt an oder in der Nähe der Batterie befindlichen Thermosensor zusammengesetzt ist, wobei der Microcontroller mit Aktuatoren oder dem Display des Mobiltelefones so verbunden ist, dass bei bei einer vorgegebenen Temperaturgrenze für den Nutzer über diese sensorisch erkennbare Warnsignale oder Warninformationen ausgelöst werden, wobei bei einer bestimmten Temperatur zudem auch Aktuatoren mit einer Kühlungsfunktion aktiviert werden können, und wobei bei einer weiteren Temperaturgrenze der Betrieb der Mobiltelefones insgesamt inaktiviert wird.

2. Vorrichtungen nach vorhergehendem Anspruch, **dadurch gekennzeichnet, dass** die Warnsignale optisch, akustisch, mechanisch durch Vibration, chemisch oder in einer Kombination hieraus ausgestaltet sind.

3. Vorrichtungen nach vorhergehenden Ansprüchen, **dadurch gekennzeichnet, dass** die Information über die aktuelle Temperatur der Batterie kontinuierlich auf dem Display des Mobiltelefones digital oder analog dargestellt wird, oder diese Information auf Abfrage durch den Nutzer über das Display darstellbar ist.

4. Vorrichtungen nach vorhergehenden Ansprüchen, **dadurch gekennzeichnet, dass** eine Kontrolle der Betriebstemperatur der Batterie sowie der Aktuatoren über im Microprozessor vorgegebene Programme erfolgt.

5. Vorrichtungen nach vorhergehenden Ansprüchen, **dadurch gekennzeichnet, dass** das gesamte Temperaturkontrollsystem als eine mechanisch separate Funktionseinheit mit der Batterie in Form einer Karte ausgestaltet ist, die reversibel in das Mobiltelefon eingesetzt werden kann.

6. Vorrichtungen nach vorhergehenden Ansprüchen, **dadurch gekennzeichnet, dass** eine Kontrolle der Batterietemperatur über einen Sensor erfolgt, der deren Wärmeemission berührunsgslos über Infarot misst.

7. Vorrichtungen nach vorhergehenden Ansprüchen, **dadurch gekennzeichnet, dass**, der Temperatursensor aus einer flexiblen, elektrisch leitenden Folie besteht, die direkt auf die Oberfläche der Batterie aufgebracht ist.

8. Vorrichtungen nach vorhergehenden Ansprüchen, **dadurch gekennzeichnet, dass** als weitere Schaltungselemente wahlweise sich unter thermischem Einfluss verformende mechanische Elemente, Thermolemente oder Thermistoren oder deren Kombinationen eingesetzt sind.

9. Vorrichtungen nach vorhergehenden Ansprüchen, **dadurch gekennzeichnet, dass** die Batterie bei einer bestimmten Temperatur durch eine im Mobiltelefon installierte mechanische Auswurfvorrichtung ausgeworfen wird.

10. Vorrichtungen nach vorhergehenden Ansprüchen, **dadurch gekennzeichnet, dass** mit dem Temperaturkontrollsystem eine aktive Kühlvorrichtung gekoppelt ist, die bei einer bestimmten Temperaturgrenze aktiviert wird.

11. Vorrichtungen nach vorhergehenden Ansprüchen, **dadurch gekennzeichnet, dass** in das Temperaturkontrollsystem Eigenschaften zur Aufnahme, Speicherung, Verarbeitung und Weiterleitung von Daten integriert sind, wobei die Datenübertragung über elektrische Leitungen, Funkwellen oder optische Wellen erfolgen kann.

12. Vorrichtungen nach vorhergehenden Ansprüchen, **dadurch gekennzeichnet, dass** die Anwendung des Temperaturkontrollsystems auch für solche mobilen batterie-elektrischen Geräte vorgesehen ist, deren Batterien in der Handhabung technisch vergleichbare Gefährdungspotenziale aufweisen wie sie bei Mobiltelefonen gegeben sind.
